# NOUVEAU FASCICULE DE BREVET EUROPEEN

(11) **EP 3 774 450 B2**
(45) Date de publication et mention de la décision concernant l'opposition: **03.06.2026**
(45) Mention de la délivrance du brevet: 29.12.2021
(21) Numéro de dépôt: 19711096.8
(22) Date de dépôt: 19.03.2019
(51) Int. Cl.: B60R 11/04

(54) **SUPPORT DE FIXATION D'UNE CAMÉRA À UN PARE-BRISE DE VÉHICULE AUTOMOBILE**
MITTEL ZUR BEFESTIGUNG EINER KAMERA AN DER WINDSCHUTZSCHEIBE EINES KRAFTFAHRZEUGS
MEANS FOR FIXING A CAMERA TO THE WINDSCREEN OF A VEHICLE

(30) Priorité: 27.03.2018 FR 1852635
(43) Date de publication de la demande: 17.02.2021
(73) Titulaire: Renault s.a.s, 92100 Boulogne Billancourt (FR)
(72) Inventeur: DESACHY, David, 78390 bois d'arcy (FR); VARET, Jean-Jérome, 78114 Magny les Hameaux (FR)
(74) Mandataire: Renault Group
(86) Numéro de dépôt international: PCT/EP2019/056808
(87) Numéro de publication internationale: WO 2019/185399

(56) Documents cités:
- EP-A1- 2 965 949
- WO-A1-2013/123161
- DE-A1- 102008 050 320
- US-A1- 2017 240 120
- US-B1- 7 619 680
- US-B1- 9 507 245

## Description

### DOMAINE TECHNIQUE DE L'INVENTION

L'invention se rapporte au domaine des transports et plus particulièrement aux véhicules comportant une caméra montée sur le pare-brise. Elle trouve une application avantageuse sous la forme d'un support de fixation d'une caméra à un pare-brise de véhicule automobile.

### ETAT DE LA TECHNIQUE

Les véhicules actuels sont munis de caméras vidéo à l'intérieur de l'habitacle, les caméras étant notamment disposées à l'avant, à l'arrière mais aussi sur les côtés latéraux du véhicule. Ces caméras servent à la fois pour les aides à la conduite au conducteur ou en mode autonome mais aussi pour filmer des événements à la demande du conducteur ou en cas de besoin, lors d'une situation dangereuse en roulage ou d'un choc par un autre véhicule en parking. La caméra située à l'avant est positionnée en partie supérieure centrale du pare-brise et orientée vers l'extérieur de manière à filmer ce qui se passe à l'avant du véhicule sans gêner la visibilité du conducteur. Différents dispositifs aptes à fixer une caméra sont connus dans l'état de l'art, par exemple le document WO2007091247 A1 décrit un agencement de montage sur une fenêtre, le document EP2179894 A2 décrit un support monobloc pour caméra, le document EP2942238 A1 décrit un support de vitre apte à recevoir en son sein une caméra et le document WO2016058601 A1 décrit un support de caméra comportant des éléments élastiques, conducteurs de chaleur configurés pour appliquer un effort de pression. Ces dispositifs présentent des inconvénients, soit ils ne permettent pas de monter et de démonter facilement la caméra de leur support, soit ils ne permettent pas le bloquage de la caméra si bien qu'elle est soumise à des vibrations.

### RESUME DE L'INVENTION

Un des buts de l'invention est de remédier à au moins une partie des inconvénients de la technique antérieure en fournissant un support de fixation d'une caméra.

A cette fin, l'invention propose un support de fixation d'une caméra à un pare-brise de véhicule automobile selon la revendication 1.

Grâce à l'invention, la caméra est montable et démontable facilement de son support.

Selon une caractéristique avantageuse, ladite au moins une languette flexible est apte à exercer sur la caméra une fois montée une force de pression de direction ayant une composante majeure parallèle à ladite platine et une composante mineure perpendiculaire à la platine et orientée vers l'extérieur du véhicule, ce qui permet de bloquer la translation de la caméra une fois montée.

Selon une autre caractéristique avantageuse, lesdites rampes sont inclinées de 10 à 15°par rapport au plan de la pla tine orientées descendantes vers une partie inférieure de la platine. Cette caractéristique permet d'obtenir un effet d'avaloir au montage de la caméra sur la platine.

Selon une autre caractéristique avantageuse, lesdites rampes comportent des nervures extérieures tridimensionnelles sur leur surface de coulissement, ce qui permet d'absorber les jeux éventuels.

Selon une autre caractéristique avantageuse, ledit thermoplastique est du polyamide ou du polytéréphtalate de butylène et est renforcé par des fibres notamment des fibres de verre, et/ou de carbone et/ou de basalte, ce qui permet d'avoir une matière composite rigide facile à travailler.

Selon une autre caractéristique avantageuse, la matière composite comprend de 20 à 50% de fibres, préférentiellement 30%, ce qui permet d'avoir une matière composite qui résiste bien aux températures sous pare-brise.

### BREVE DESCRIPTION DES FIGURES

D'autres caractéristiques et avantages apparaîtront à la lecture d'un mode de réalisation préféré décrit en référence aux figures dans lesquelles:
- la figure 1 représente un exemple de vue de l'intérieur de l'habitacle d'un véhicule situant l'emplacement d'un support selon l'invention ; et,
- la figure 2 est une vue de l'extérieur de l'habitacle d'un véhicule d'un support conforme à l'invention ; et
- la figure 3 est une vue de l'intérieur du véhicule d'un support conforme à l'invention ; et
- la figure 4 est une vue en coupe d'un support conforme à l'invention ; et
- la figure 5 représente une vue arrière d'un ensemble comportant une caméra attachée sur un support conforme à l'invention ; et
- la figure 6 est une vue en coupe d'un ensemble comportant une caméra attachée sur un support conforme à l'invention ; et
- la figure 7 représente un agrandissement d'une vue arrière d'une partie d'un support selon l'invention.

Dans l'ensemble du texte les directions et orientations sont désignées en référence à un repère orthonormé direct XYZ classiquement utilisé en conception automobile, dans lequel X désigne la direction longitudinale du véhicule, dirigé vers avant, Y est la direction transversale au véhicule, dirigé vers la gauche et Z est la direction verticale dirigée vers le haut. Les notions « avant » et « arrière » sont indiquées en référence au sens de marche normal vers l'avant du véhicule. Les notions « haut », « bas », « supérieure » et « inférieure » sont indiquées en référence à l'axe vertical des Z. Les notions « intérieur » et « extérieur » sont indiquées en référence à la vue par rapport à l'habitacle. Dans l'ensemble de la description le terme « sensiblement » signifie qu'un léger écart peut être admis par rapport à une position ou orientation nominale déterminée, par exemple « sensiblement horizontal » signifie qu'un écart de l'ordre de 10% par rapport à une orientation strictement horizontale est admis dans le cadre de l'invention. Pour plus de clarté, les éléments identiques ou similaires sont repérés par des signes de référence identiques sur l'ensemble des figures.

### DESCRIPTION DETAILLEE DES FIGURES

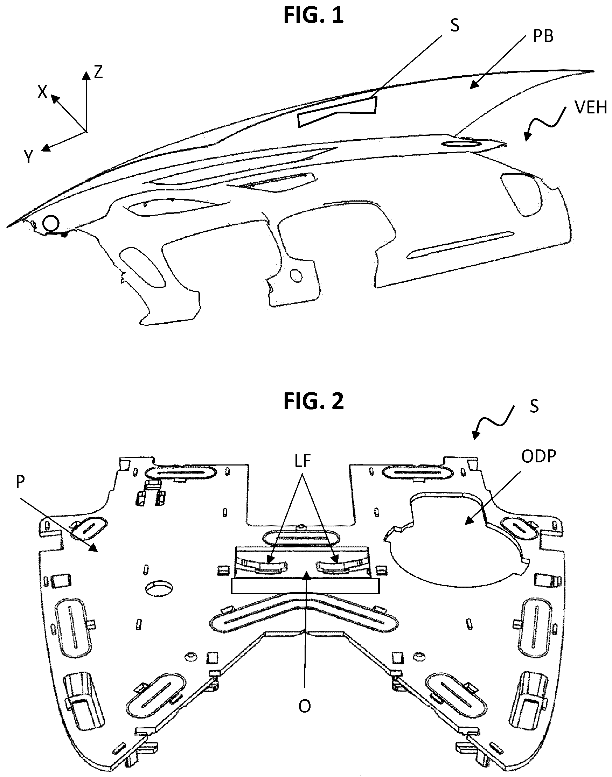

Selon un premier mode de réalisation de l'invention représenté à la **figure 1****,** est illustré un exemple de vue de l'intérieur d'un habitacle d'un véhicule VEH automobile situant l'emplacement d'un support S selon l'invention, fixé au pare-brise PB du véhicule VEH. La forme du support S sur cette figure est schématique et a pour but de montrer le positionnement et l'orientation du support S sur le pare-brise.

Sur la **figure 2** est représentée une vue de l'extérieur de l'habitacle d'un véhicule d'un support S conforme à l'invention. Il s'agit ici de la vue de l'extérieur du pare-brise en regardant le support S du dessus, il s'agit donc d'une vue de la surface extérieure de la platine P, surface qui est fixée au pare-brise PB, préférentiellement par de la colle. Le support S est composé d'une platine P plane destinée à être fixée sur le pare-brise PB, la platine P, d'environ 2 mm d'épaisseur est en matière composite, comprenant un thermoplastique renforcé par 20 à 50% de fibres, préférentiellement 30%, les fibres étant notamment des fibres de verre, ou de carbone ou de basalte. Le thermoplastique est préférentiellement du polyamide ou du polytéréphtalate de butylène. Cette platine P est destinée à supporter une caméra vidéo et éventuellement d'autres capteurs, préférentiellement un détecteur de pluie. De fait, les deux orifices notables dans la platine P sont l'orifice ODP destiné à recevoir une partie du détecteur de pluie et l'ouverture O destinée au rabat des languettes flexibles LF lors notamment du démontage de la caméra. En corrélant le positionnement du support S schématisé sur la **figure 1** et la vue de la **figure 2****,** le positionnement et l'orientation de la platine P apparait clairement. En effet, si on considère que la platine P a une forme de V inversé alors la pointe du V est située en haut du pare-brise PB et les extrémités des branches du V sont situées plus bas. La forme en V inversée est liée à une pièce nommée « shader » qui vient s'ajouter ultérieurement dans la zone triangulaire, de même que viennent s'ajouter ultérieurement deux caches qui s'enserrent l'un dans l'autre pour venir protéger et isoler la caméra vidéo et le détecteur de pluie de l'habitacle.

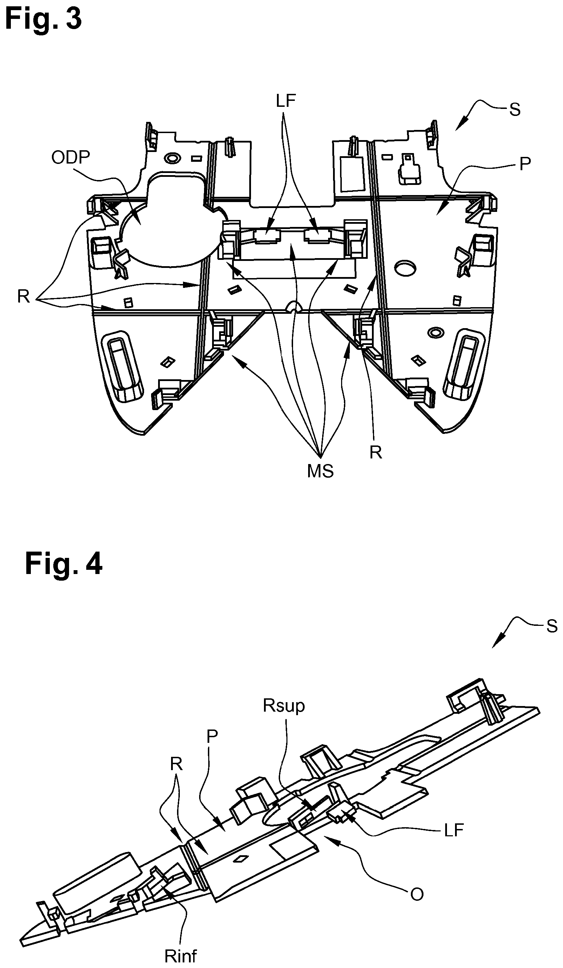

Sur la **figure 3** est représentée une vue de l'intérieur de l'habitacle d'un véhicule d'un support S conforme à l'invention. Il s'agit ici de la surface opposée à celle vue dans la figure précédente, c'est donc la surface de la platine P qui supporte la caméra vidéo et le détecteur de pluie qui est illustrée ici. Pour effectuer cette fonction de fixation cette surface présente quatre moyens de support MS de la caméra, deux moyens supérieurs, situés dans la partie positionnée en partie haute du pare-brise PB, dans la flèche du V inversé, partie de la platine P que nous nommerons partie supérieure, et deux moyens inférieurs sont situés plus bas, au niveau des branches du V inversé, partie de la platine P que nous nommerons partie inférieure. Ces moyens de support MS (qui seront plus visibles sur la figure suivante) comportent des rampes sur lesquelles coulisse la caméra lors de son montage, une partie desdites rampes étant en contact avec la caméra une fois montée, et des moyens de butée associés à chaque rampe qui viennent limiter aussi bien à l'avant lors du montage qu'à l'arrière la translation de ladite caméra une fois fixée. Les moyens de support MS supérieurs sont situés préférentiellement symétriquement par rapport à l'axe de symétrie des branches du V inversé de la platine P et ont vocation à accueillir des pattes de la caméra vidéo, de même pour les moyens de support MS inférieurs. La caméra vidéo est donc fixée par des pattes situées sur sa partie supérieure, la fixation doit donc à la fois contrer la gravité, mais a aussi pour but d'éviter les vibrations. L'écartement entre les deux moyens de support MS supérieurs et les deux moyens de support MS inférieurs sont similaires, de l'ordre de 60 mm, mais l'écartement des rampes inférieures des moyens de support MS inférieurs est d'environ 5 mm plus large de manière à constituer un moyen de détrompage lors du montage (en accord avec la géométrie de la caméra).
Comme sur la figure précédente on voit l'orifice ODP destiné à recevoir une partie du détecteur de pluie et l'ouverture O destinée au pliage des languettes flexibles LF. Ces languettes flexibles LF sont des languettes du même matériau que la platine P contre lesquelles la caméra, une fois montée sur la platine P, est bloquée en contact. Ces languettes LF sont en saillie de chacun des moyens de support MS supérieurs, s'étendant transversalement, sensiblement horizontalement et préférentiellement avec une faible inclinaison similaire à celle des rampes, vers le centre de la platine P sans se toucher. Ces languettes flexibles LF sont donc situées à l'arrière de la caméra si on considère que l'avant de la caméra est la partie qui comporte l'objectif, ce qui permet de ne pas entraver l'objectif. Lors du montage de la caméra sur la platine P, en position initiale on dispose des pattes correspondantes de la caméra de manière à ce que l'objectif de la caméra soit au niveau de l'ouverture en V inversé et l'arrière de la caméra soit du côté des languettes flexibles LF, chaque patte étant en contact de chacune des rampes, puis il suffit d'appuyer au centre de la caméra car la pente des rampes étant de 10 à 15° par rapport au plan de la platine et orientées descendantes vers la partie inférieure de la platine, cette pente vient donc s'ajouter à celle du pare-brise, ces rampes procurent un effet d'avaloir. Ainsi, en appuyant juste d'un doigt au milieu de la caméra positionnée sur les rampes (la figure suivante en coupe permettra de mieux apprécier la manipulation), la caméra glisse en coulissant sur les rampes jusqu'à se positionner contre les butées. Les surfaces des rampes sur lesquelles glissent les pattes de la caméra constituent donc des surfaces de coulissement. Les languettes flexibles LF viennent alors également en butée contre l'arrière de la caméra la bloquant en position par contact. Puis pour démonter la caméra de la platine P, il suffit d'appuyer sur les languettes flexibles LF de manière à ce qu'elles ne viennent plus bloquer la translation de la caméra, d'où l'ouverture O pour ne pas gêner le mouvement, et de pousser la caméra pour remonter les rampes des moyens de support MS jusqu'à atteindre la position initiale et la sortir des moyens de support MS. La conception avec deux languettes flexibles LF, symétriques, plutôt qu'une seule permet de robustifier la conception au cas où une des languettes flexibles LF serait abîmée. Néanmoins, l'invention peut également comporter une seule languette flexible s'étendant sur toute la largeur entre les rampes supérieures et ayant une forme en M par exemple pour garantir la flexion. Sur cette figure sont aussi visibles des rainures R sur cette surface de la platine P, ces rainures R qui sont perpendiculaires entre elles sont des zones de faiblesse, puisque ce sont des zones comportant moins de matière, destinées à absorber les défauts de galbe du plan incliné par rapport au galbe du pare-brise PB.

Sur la **figure 4** est représentée une vue en coupe selon l'axe Y central du véhicule d'un support S conforme à l'invention. La vue qui est présentée coupe donc la platine P de manière symétrique par rapport aux moyens de support MS inférieurs et supérieurs, la platine P est ici orientée retournée par rapport à sa position sur le pare-brise PB, c'est-à-dire que la surface orientée vers l'intérieur de l'habitacle est ici celle, visible, orientée vers le haut de la page et la surface orientée vers le pare-brise est ici celle qui est cachée. La pièce est inclinée de manière à pouvoir mieux apprécier les volumes et notamment les rampes des moyens de support MS. Ainsi, on visualise la rampe supérieure Rsup et la rampe inférieure Rinf qui sont parallèles, la pente des rampes inférieures Rinf est donc égale à celle des rampes supérieures Rsup. De la même manière les rampes inférieures Rinf et supérieures Rsup ont des largeurs similaires de l'ordre de 2 mm. On peut aussi apercevoir sur cette figure que les rampes Rsup, Rinf comportent des nervures extérieures tridimensionnelles sur leur surface de coulissement. Ces nervures de l'ordre de 0,3 mm sont préférentiellement parallèles à la direction de coulissement de la caméra et forment ainsi des godrons tampons en X/Z et permettent ainsi un écrasement pour absorber et ainsi empêcher les vibrations vertico-horizontales. De la même façon, on voit sur cette figure que des nervures sont aussi présentes sur les renforts latéraux des butées en bas de chacune des rampes Rinf, Rsup, cette fois les nervures de l'ordre de 0,3 mm sont verticales et forment ainsi des godrons tampons en Y et permettent ainsi un écrasement pour absorber et ainsi empêcher les vibrations latérales. Le rattrapage de jeu est donc assuré au moyen de ces nervures. Comme précédemment, sont également représentés une languette flexible LF en saillie par rapport à la rampe supérieure Rsup, ainsi que l'ouverture O sous-jacente et des rainures R. On distingue plus précisément sur cette figure la forme et l'inclinaison des languettes flexibles LF, en effet, ces languettes LF sont légèrement inclinées par rapport au plan de la platine P de manière à appliquer une force de pression sur la caméra, une fois montée, ayant une composante majeure parallèle à ladite platine P et une composante mineure perpendiculaire à la platine P et orientée vers l'extérieur du véhicule VEH. L'inclinaison de la languette flexible LF et les pentes des rampes Rsup et Rinf étant similaires. En effet, la pente des rampes Rsup et Rinf participe aussi à l'exercice sur la caméra C une fois montée d'une force de pression de direction ayant une composante majeure parallèle à ladite platine P et une composante mineure perpendiculaire à la platine P et orientée vers l'extérieur du véhicule VEH. On distingue aussi un décrochage des arrêtes des languettes LF dans la zone prévue pour être en contact avec la caméra une fois montée, comme on pouvait déjà l'apercevoir sur la figure précédente. Ainsi sur une portion de la longueur la languette LF est plus large, s'étirant davantage vers l'emplacement prévu pour la caméra. Ce décrochage permet de renforcer la languette LF dans la zone où elle doit être en contact avec la caméra, de manière à assurer son bloquage.

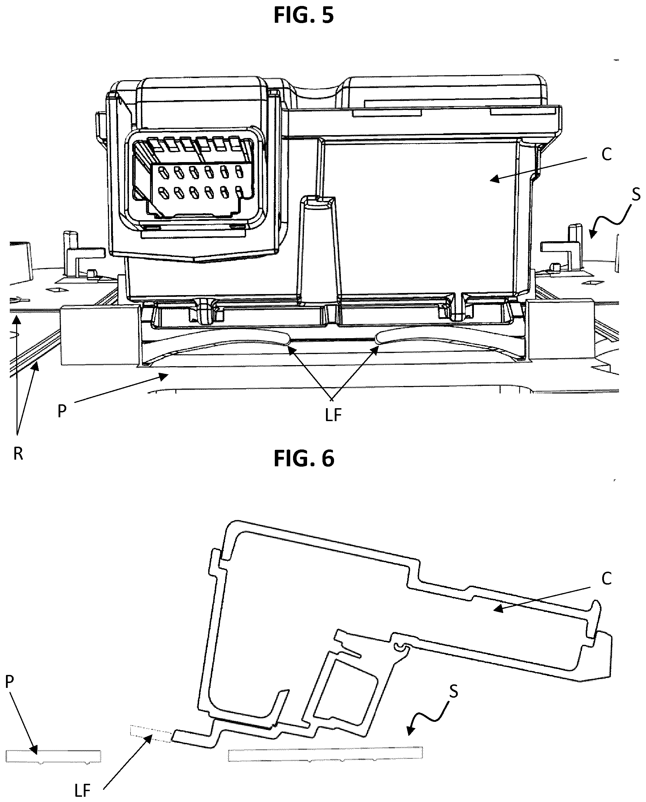

Sur la **figure 5** est représentée une vue arrière d'un ensemble comportant une caméra C attachée sur un support S conforme à l'invention. La platine P rainurée R est vue de l'arrière de la caméra C avec un faible angle d'inclinaison afin de mieux illustrer le positionnement de la caméra C et son bloquage, une fois montée, par les languettes flexibles LF qui sont alors en appui contre elle, permettant de rattraper les jeux. La compréhension du bloquage est encore plus explicite sur la figure suivante.

En effet, sur la **figure 6** est représentée une vue en coupe selon un axe vertical XZ passant par le centre d'une languette flexible LF d'un ensemble comportant une caméra C attachée sur un support S conforme à l'invention. La vue en coupe permet de bien distinguer les languettes flexibles LF de la platine P qui vient en appui contre la caméra C. Il apparaît aussi clairement sur cette figure que la languette flexible LF vue en coupe est sensiblement parallèle à la platine P tout en étant préférentiellement, tel que représenté sur la figure, légèrement inclinée, similairement aux rampes Rsup et Rinf, de manière à exercer un effort vers l'extérieur du véhicule.

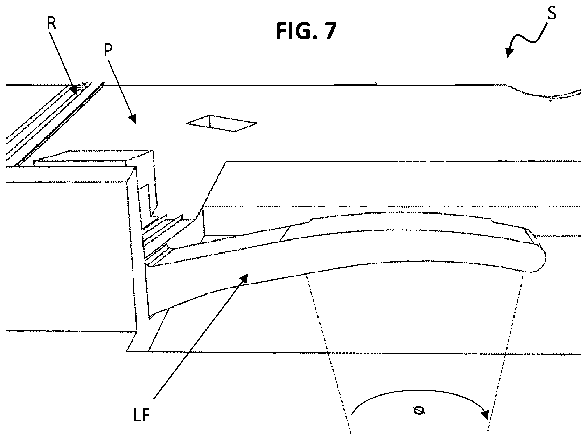

Sur la **figure 7** est représenté un agrandissement d'une vue arrière d'une partie d'un support S selon l'invention, l'objectif de cette figure est de montrer la forme préférentielle des languettes flexibles LF de la platine P rainurée R. En effet, chaque languette flexible LF, en saillie des rampes supérieures Rsup comporte une première partie sensiblement rectiligne puis une seconde partie en arc de cercle de manière à assurer de venir au contact de la caméra C en dépit des jeux possibles. Cette forme préférentielle en arc de cercle permet d'éviter la cassure en réduisant la flexion par rapport à une forme rectiligne tout le long de la languette flexible LF. En effet, l'appui sur la languette flexible LF lors du démontage engendre une flexion de la languette flexible LF et cette forme permet de de mieux répartir l'effort et ainsi d'obtenir une meilleure tenue à l'effort dans le temps. Le diamètre de courbure 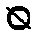 choisi est ici de 46 mm afin d'assurer le débattement de la languette flexible LF aussi bien au montage qu'au démontage.

## Revendications

1. Support (S) de fixation d'une caméra (C) à un pare-brise (PB) de véhicule (VEH) automobile comportant une platine (P) plane destinée à être fixée sur le pare-brise (PB), la platine (P) étant en matière composite comprenant un thermoplastique renforcé, la platine (P) étant **caractérisée en ce qu'**elle comporte sur sa face opposée à sa face apte à être en contact avec le pare-brise (PB) :
- des rampes (Rsup, Rinf) aptes à permettre le coulissement de la caméra (C) lors de son montage, au moins une partie desdites rampes (Rsup, Rinf) étant apte à être en contact avec la caméra (C) une fois montée,
- des moyens de butée, dont au moins un moyen de butée est associé à une desdites rampes (Rsup, Rinf) pour limiter la translation de ladite caméra (C) et au moins un autre moyen de butée est au moins une languette flexible (LF) de butée apte à bloquer en contact la caméra (C), une fois ladite caméra (C) montée sur la platine (P),
ladite au moins une languette flexible (LF) est inclinée par rapport à la platine (P) de manière à ce que son plan soit sensiblement horizontal une fois ladite platine (P) montée sur le pare-brise (PB) et ladîte au moins une languette flexible (LF) est en saillie d'une desdites rampes (Rsup) et s'étend transversalement vers le centre de la platine (P) en présentant notamment localement un rayon de courbure prédéterminé,
le support comportant une ouverture (O) apte à permettre le rabat de la au moins une languette flexible (LF) dans le plan de la platine (P).

2. Support (S) selon la revendication précédente **caractérisé en ce que** ladite au moins une languette flexible (LF) est apte à exercer sur la caméra (C) une fois montée une force de pression de direction ayant une composante majeure parallèle à ladite platine (P) et une composante mineure perpendiculaire à la platine (P) et orientée vers l'extérieur du véhicule (VEH).

3. Support (S) selon l'une quelconque des revendications précédentes **caractérisé en ce que** lesdites rampes (Rsup, Rinf) sont inclinées de 10 à 15° par rapport au plan de la platine (P) orientées descendantes vers une partie inférieure de la platine (P).

4. Support (S) selon l'une quelconque des revendications précédentes **caractérisé en ce que** lesdites rampes (Rsup, Rinf) comportent des nervures extérieures tridimensionnelles sur leur surface de coulissement.

5. Support (S) selon l'une quelconque des revendications précédentes **caractérisé en ce que** ledit thermoplastique est du polyamide ou du polytéréphtalate de butylène et **en ce qu'**il est renforcé par des fibres notamment des fibres de verre, et/ou de carbone et/ou de basalte.

6. Support (S) selon la revendication précédente **caractérisé en ce que** la matière composite comprend de 20 à 50% de fibres, préférentiellement 30%.

## Patentansprüche

1. Halterung (S) zur Befestigung einer Kamera (C) an einer Windschutzscheibe (PB) eines Kraftfahrzeugs (VEH), umfassend eine ebene Platte (P), die dazu bestimmt ist, an der Windschutzscheibe (PB) befestigt zu werden, wobei die Platte (P) aus einem Verbundwerkstoff ist, der einen verstärkten Thermoplast beinhaltet, wobei die Platte (P) **dadurch gekennzeichnet ist, dass** sie auf ihrer Seite, die entgegengesetzt zu ihrer Seite ist, die geeignet ist, mit der Windschutzscheibe (PB) in Kontakt zu sein, umfasst:
- Rampen (Rsup, Rinf), die geeignet sind, das Gleiten der Kamera (C) bei deren Montage zu ermöglichen, wobei mindestens ein Teil der Rampen (Rsup, Rinf) geeignet ist, mit der Kamera (C) in Kontakt zu sein, nachdem sie montiert wurde,
- Anschlagmittel, von denen mindestens ein Anschlagmittel einer der Rampen (Rsup, Rinf) zugeordnet ist, um die Translation der Kamera (C) zu begrenzen, und mindestens ein weiteres Anschlagmittel mindestens eine flexible Anschlagzunge (LF) ist, die geeignet ist, die Kamera (C) berührend zu sichern, nach dem die Kamera (C) auf der Platte (P) montiert wurde,
wobei die mindestens eine flexible Zunge (LF) in Bezug auf die Platte (P) so geneigt ist, dass ihre Ebene im Wesentlichen horizontal ist, nachdem die Platte (P) an der Windschutzscheibe (PB) montiert wurde und die mindestens eine flexible Zunge (LF) von einer der Rampen (Rsup) absteht und sich quer zum Mittelpunkt der Platte (P) hin erstreckt, wobei sie insbesondere lokal einen vorbestimmten Krümmungsradius aufweist,
wobei die Halterung eine Öffnung (O) umfasst, die geeignet ist, das Umlegen der mindestens einen flexiblen Zunge (LF) in der Ebene der Platte (P) zu ermöglichen.

2. Halterung (S) nach dem vorhergehenden Anspruch, **dadurch gekennzeichnet, dass** die mindestens eine flexible Zunge (LF) geeignet ist, auf die Kamera (C), nachdem sie montiert wurde, eine Druckkraft mit einer Richtung auszuüben, die eine größere Komponente parallel zu der Platte (P) und eine kleinere Komponente senkrecht zu der Platte (P) hat und zur Außenseite des Fahrzeugs (VEH) hin ausgerichtet ist.

3. Halterung (S) nach einem der vorhergehenden Ansprüche, **dadurch gekennzeichnet, dass** die Rampen (Rsup, Rinf) um 10 bis 15° in Bezug auf die Ebene der Platte (P) geneigt sind und zu einem unteren Teil der Platte (P) hin abfallend ausgerichtet sind.

4. Halterung (S) nach einem der vorhergehenden Ansprüche, **dadurch gekennzeichnet, dass** die Rampen (Rsup, Rinf) dreidimensionale äußere Rippen auf ihrer Gleitfläche umfassen.

5. Halterung (S) nach einem der vorhergehenden Ansprüche, **dadurch gekennzeichnet, dass** der Thermoplast Polyamid oder Polybutylenterephthalat ist und dass er mit Fasern, insbesondere Glas- und/oder Kohlenstoff- und/oder Basaltfasern, verstärkt ist.

6. Halterung (S) nach dem vorhergehenden Anspruch, **dadurch gekennzeichnet, dass** der Verbundwerkstoff 20 bis 50 % Fasern, bevorzugt 30 %, umfasst.

## Claims

1. Support (S) for attaching a camera (C) to a windshield (PB) of a motor vehicle (VEH) comprising a planar plate (P) intended to be attached to the windshield (PB), the plate (P) being made of composite material comprising a reinforced thermoplastic, the plate (P) being **characterized in that** it comprises, on its face opposite its face that can be in contact with the windshield (PB):
- ramps (Rsup, Rinf) suitable for allowing the camera (C) to slide when it is being mounted, at least a part of said ramps (Rsup, Rinf) being able to be in contact with the camera (C) once mounted,
- abutment means, including at least one abutment means associated with one of said ramps (Rsup, Rinf) to limit the translation of said camera (C) and at least one other abutment means that is at least one flexible abutment tab (LF) capable of immobilizing the camera (C) in contact, once said camera (C) is mounted on the plate (P),
said at least one flexible tab (LF) is inclined relative to the plate (P) so that its plane is substantially horizontal once said plate (P) is mounted on the windshield (PB) and said at least one flexible tab (LF) protrudes from one of said ramps (Rsup) and extends transversely toward the centre of the plate (P) while notably locally exhibiting a predetermined radius of curvature,
the support comprising an opening (O) suitable for allowing the at least one flexible tab (LF) to be folded back in the plane of the plate (P).

2. Support (S) according to the preceding claim, **characterized in that** said at least one flexible tab (LF) is capable of exerting, on the camera (C) once mounted, a pressure force of a direction that has a major component parallel to said plate (P) and a minor component at right angles to the plate (P) and oriented toward the outside of the vehicle (VEH).

3. Support (S) according to either one of the preceding claims, **characterized in that** said ramps (Rsup, Rinf) are inclined by 10 to 15° relative to the plane of the plate (P) and oriented downward toward a lower part of the plate (P).

4. Support (S) according to any one of the preceding claims, **characterized in that** said ramps (Rsup, Rinf) comprise three-dimensional external ribs on their sliding surface.

5. Support (S) according to any one of the preceding claims, **characterized in that** said thermoplastic is polyamide or polybutylene terephthalate and **in that** it is reinforced by fibres, notably glass and/or carbon and/or basalt fibres.

6. Support (S) according to the preceding claim, **characterized in that** the composite material comprises 20 to 50% fibres, preferentially 30%.
